# DEMANDE DE BREVET EUROPEEN

(11) **EP 2 189 317 A1**
(43) Date de publication de la demande: **26.05.2010**
(21) Numéro de dépôt: 09176598.2
(22) Date de dépôt: 20.11.2009
(51) Int. Cl.: B60K 5/12, F02F 7/00

(54) **Support de groupe motopropulseur à rupture programmée, fixé à un brancard d'un véhicule automobile**

(30) Priorité: 21.11.2008 FR 0857911
(71) Demandeur: Peugeot Citroën Automobiles SA, 78140 Vélizy-Villacoublay (FR)
(72) Inventeur: Bourdin, Loïc, 95870 Bezons (FR); Dautry, Cédric, 78110 Le Vesinet (FR); Boudin, Emmanuel, 92600 Asnières (FR)

(57) **Abrégé**

Support de groupe motopropulseur fixé en au moins deux points espacés l'un de l'autre, à un brancard (20) d'un véhicule automobile, ce brancard comportant entre ces deux points de fixation espacés, une zone de déformation contrôlée (32) prévue pour absorber de l'énergie dans le cas d'un choc sur le véhicule, **caractérisé en ce qu**'il comprend une liaison (14) vers un des deux points de fixation, comportant un point de rupture programmée (30) disposant d'une résistance mécanique réduite.

## Description

La présente invention concerne un support de groupe motopropulseur fixé sur un brancard avant de véhicule automobile, ainsi que le véhicule automobile équipé d'un tel support.

Les véhicules automobiles subissent des essais de chocs dans des conditions particulières qui représentent différents types d'accidents pouvant se produire, pour notamment chercher à protéger les passagers des blessures et améliorer la sécurité.

Ces essais comprennent en particulier des chocs sur la partie avant du véhicule, représentant des accidents fréquents. On prévoit dans ces cas une déformation particulière des brancards avant dans des zones précises de déformation contrôlée. Ces déformations absorbent de l'énergie et permettent un guidage des éléments principaux, le groupe motopropulseur notamment, pour éviter des intrusions dans l'habitacle qui pourraient blesser les occupants.

Dans le cas où les supports du groupe motopropulseur fixés sur un brancard ne sont pas prévus pour se rompre, ils peuvent alors rigidifier de manière trop importante ce brancard qui ne peut pas se déformer librement, surtout dans le cas où une zone de déformation contrôlée est prévue à proximité de ce support.

En variante, un type de véhicule connu présenté notamment par le document US-3869017, comporte des supports du groupe motopropulseur fixés sur un châssis de véhicule, qui peuvent se rompre en cas de choc important. L'énergie cinétique due à la masse de ce groupe motopropulseur lors du choc, et s'appliquant sur le châssis comportant des zones de déformation contrôlée, est alors réduite.

Un inconvénient de ce dispositif est que le groupe motopropulseur n'étant plus fermement maintenu, peu lors du choc se déplacer en causant des dommages.

La présente invention a notamment pour but d'apporter à la réalisation d'un support de groupe motopropulseur fixé sur un brancard, une solution simple, efficace et économique, permettant à la fois une déformation du brancard en cas de choc tout en maintenant ce groupe motopropulseur.

Elle propose à cet effet un support de groupe motopropulseur fixé en au moins deux points espacés l'un de l'autre, à un brancard d'un véhicule automobile, ce brancard comportant entre ces deux points de fixation espacés, une zone de déformation contrôlée prévue pour absorber de l'énergie dans le cas d'un choc sur le véhicule, **caractérisé en ce qu**'il comprend une liaison vers un des deux points de fixation, comportant un point de rupture programmée disposant d'une résistance mécanique réduite.

Un avantage du support de groupe motopropulseur selon l'invention est qu'avec la résistance mécanique réduite, lors d'un choc la liaison se rompt facilement et le brancard n'est plus rigidifié par le support. La zone de déformation contrôlée du brancard peut librement se déformer en absorbant une énergie suivant un mode de déformation prévu sans le support.

De plus le support de groupe motopropulseur selon l'invention peut comporter une ou plusieurs des caractéristiques suivantes, qui peuvent être combinées entre elles.

Avantageusement, les deux points de fixation se trouvent chacun à l'extrémité d'un bras de ce support.

Avantageusement, un bras comprend le point de rupture programmée qui comporte une épaisseur réduite dans le sens longitudinal.

Avantageusement, le support comporte longitudinalement un bras avant et un bras arrière, ce bras arrière comprenant le point de rupture programmée.

Dans un sens vertical, les deux bras peuvent comporter une épaisseur sensiblement équivalente.

Avantageusement, le support comporte un moyen de filtration des vibrations.

Ce support peut comporter un anneau circulaire disposé sensiblement horizontalement, sur lequel se raccorde deux bras comportant à leur extrémité les points de fixation, cet anneau contenant une matière souple comprenant un moyeu central fixé sur le groupe motopropulseur.

Avantageusement, la zone de déformation contrôlée du brancard est entièrement incluse longitudinalement entre les deux points de fixation du support.

L'invention comporte aussi un véhicule automobile comprenant un brancard avant recevant un support de groupe motopropulseur, **caractérisé en ce que** ce support est réalisé suivant l'une quelconque des caractéristiques précédentes.

L'invention sera mieux comprise et d'autres caractéristiques et avantages apparaîtront plus clairement à la lecture de la description ci-après donnée à titre d'exemple en référence aux dessins annexés dans lesquels :
- la figure 1 est une vue en perspective d'une boîte de vitesses d'un groupe motopropulseur, fixée à un brancard par un support selon l'invention ;
- la figure 2 est une vue de dessus de ce support fixé sur le brancard ; et
- la figure 3 est une vue de dessus de ce support fixé sur le brancard, après un choc sur l'avant du véhicule.

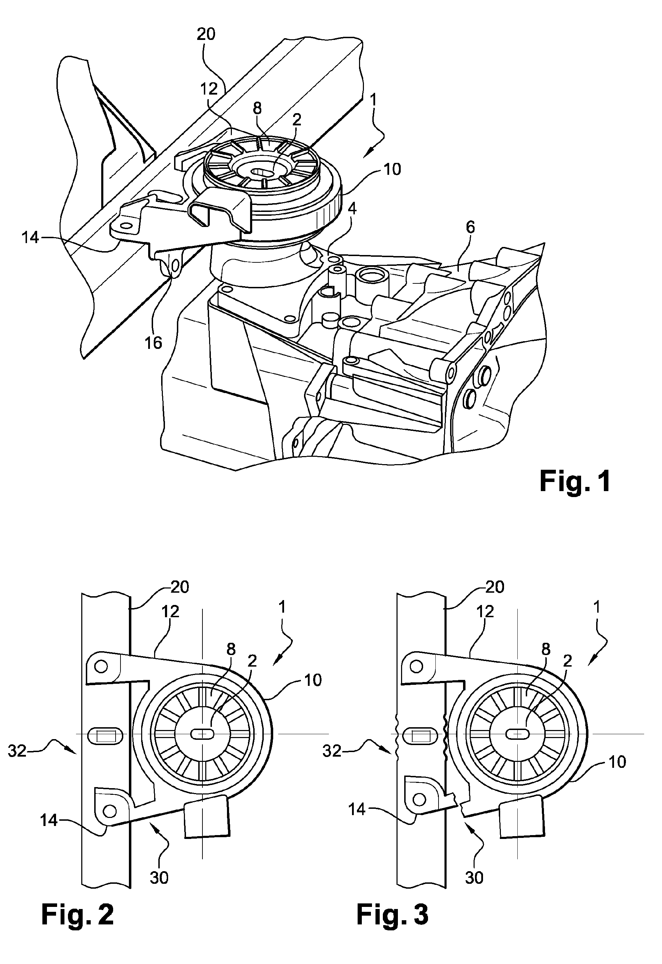

Les figures 1 et 2 présentent un support 1 comportant un anneau circulaire 10 disposé horizontalement, contenant un remplissage en matière souple 8 comme un caoutchouc, comprenant un moyeu central 2. Cette matière souple 8 forme un amortisseur de vibration, isolant le groupe motopropulseur de la caisse du véhicule.

Un carter de boîte de vitesses 6 comporte sur le dessus un plan de joint horizontal, sur lequel vient se fixer par des vis une embase 4 comprenant un axe vertical. Cet axe vertical se termine vers le haut par le moyeu 2 maintenu au centre de la matière souple 8.

L'anneau circulaire 10 du support 1 comprend tourné vers un côté du véhicule, un bras avant 12 et un bras arrière 14 qui se raccordent à cet anneau tangentiellement, vers l'avant ou l'arrière de l'anneau. Les bras avant 12 et arrière 14 sont donc disposés sensiblement transversalement, leurs axes étant espacés d'environ une dizaine de centimètres.

Le véhicule automobile comporte deux brancards avant 20 longitudinaux, qui encadrent le groupe motopropulseur et relient la caisse à la face avant de ce véhicule. Chaque brancard a une section sensiblement rectangulaire et constante, deux côtés de la section étant disposés horizontalement de manière à former une face supérieure qui est mise à plat.

La face supérieure du brancard 20 reçoit les extrémités des bras avant 12 et arrière 14 qui sont posées dessus, ces extrémités comportant chacune un perçage recevant une vis de fixation du support 1 sur cette face supérieure du brancard. L'extrémité du bras arrière 14 comporte de plus vers le bas, une face verticale d'appui 16 qui est serrée par une vis sur la face latérale interne du brancard 20 tournée vers le groupe motopropulseur, pour positionner et bloquer dans toutes les directions le support 1 sur ce brancard.

Après le montage, l'anneau circulaire 10 du support 1 est proche de la face latérale interne du brancard 20, avec un petit jeu interposé entre les deux.

On réalise ainsi un support 1 du groupe motopropulseur rigidement fixé au brancard 20, comportant une forte élasticité suivant tous les axes pour assurer une filtration des vibrations émises par le moteur, tout en maintenant le poids de ce groupe motopropulseur et en assurant une reprise des efforts dus à la réaction du couple moteur appliqué sur les roues motrices.

Le bras avant 12 du support 1 comporte vue de dessus une section sensiblement constante, qui lui assure une bonne résistance mécanique.

Le bras arrière 14 du support 1 comporte entre l'anneau circulaire 10 et l'extrémité de ce bras vissée sur le brancard 20, un point de rupture programmée 30 comprenant vue de dessus une épaisseur réduite dans le sens longitudinal. Par contre dans un sens vertical, le bras arrière 14 conserve une épaisseur importante sensiblement équivalente à celle de l'autre bras avant 12, lui permettant de supporter avec cet autre bras le poids du groupe motopropulseur.

Le brancard 20 comporte une zone de déformation contrôlée 32 qui s'étend longitudinalement entièrement entre les deux bras 12, 14 du support 1. Cette zone de déformation contrôlée 32 comporte un léger pliage préalable de la tôle formant le brancard 20, qui permet en cas de choc avant sur le véhicule, de prévoir une compression de ce brancard suivant son axe pour constituer une forme en accordéon permettant une compression progressive et absorbant de l'énergie.

De cette manière on limite l'accélération négative lors d'un choc avant, et réduit les effets sur les passagers du véhicule.

La figure 3 présente le brancard 20 après un choc avant, sa zone de déformation contrôlée 32 ayant été comprimée par l'énergie délivrée lors du choc.

La distance entre les fixations des bras 12, 14 sur le brancard 20 ayant été réduite dans la direction longitudinale par la compression de la zone intermédiaire de déformation contrôlée 32, ces bras subissent une forte contrainte tendant à les rapprocher l'un de l'autre. Le bras arrière 14 s'est alors rompu de manière programmée au niveau de son point de rupture 30 d'épaisseur réduite, comportant une moindre résistance mécanique pour une contrainte longitudinale.

Le bras arrière 14 étant rompu avec une énergie modérée pour résister à des sollicitations normales, cette rupture se produit rapidement après le début de compression de la zone de déformation contrôlée 32. Le support 1 rigidifie peu le brancard 20, et donc ne perturbe pas vraiment cette compression.

Le bras avant 12 ayant été préservé des fortes contraintes par la rupture du bras arrière 14 qui intervient tôt, n'est pas endommagé. Après le choc sur le véhicule, ce bras avant 12 maintient toujours le support 1 qui supporte le groupe motopropulseur. De cette manière ce groupe motopropulseur est toujours en place, et ne constitue pas un ensemble détaché qui pourrait être dangereux.

Avantageusement, le bras arrière 14 comporte le point de rupture programmé 30 pour lors d'un choc, ne pas ajouter l'énergie cinétique du groupe motopropulseur à la caisse du véhicule reliée à la partie arrière du brancard.

Le support 1 peut se monter facilement à la place des supports suivant l'art antérieur, ne comportant par de point de rupture programmé 30, sans rien modifier à la caisse du véhicule ni au groupe motopropulseur, ce qui permet de réduire les coûts d'étude et de fabrication.

De plus ce support 1 comporte un encombrement similaire et un coût qui n'est pas majoré, par rapport à un autre support élastique du même type réalisé suivant l'art antérieur.

En variante, le support 1 suivant l'invention pourrait être fixé sur un autre type de brancard 20 comportant par exemple des faces inclinées. Le support 1 pourrait aussi ne pas contenir d'amortisseur de vibration, ou contenir un autre type d'amortisseur.

Les fixations du support 1 sur le brancard 20 pourraient être différentes, chaque point de fixation comportant par exemple une seule vis, ou plusieurs vis disposées suivant un même plan, ou sur différents plans.

## Revendications

1. Support de groupe motopropulseur fixé en au moins deux points espacés l'un de l'autre, à un brancard (20) d'un véhicule automobile, ce brancard comportant entre ces deux points de fixation espacés, une zone de déformation contrôlée (32) prévue pour absorber de l'énergie dans le cas d'un choc sur le véhicule, 'iet comportant une liaison (14) vers un des deux points de fixation, comportant un point de rupture programmée (30) disposant d'une résistance mécanique réduite, **caractérisé en ce que** la zone de déformation contrôlée (32) du brancard (20), est entièrement incluse longitudinalement entre les deux points de fixation du support (1).

2. Support de groupe motopropulseur selon la revendication 1, **caractérisé en ce que** les deux points de fixation se trouvent chacun à l'extrémité d'un bras (12, 14) de ce support (1).

3. Support de groupe motopropulseur selon la revendication 2, **caractérisé en ce qu'**un bras (14) comprend le point de rupture programmée (30), qui comporte une épaisseur réduite dans le sens longitudinal.

4. Support de groupe motopropulseur selon la revendication 2 ou 3, **caractérisé en ce qu'**il comporte longitudinalement un bras avant (12) et un bras arrière (14), ce bras arrière comportant le point de rupture programmée (30).

5. Support de groupe motopropulseur selon l'une des revendications 2 à 4, **caractérisé en ce que** dans un sens vertical, les deux bras (12, 14), comportent une épaisseur sensiblement équivalente.

6. Support de groupe motopropulseur selon l'une quelconque des revendications précédentes, **caractérisé en ce qu'**il comporte un moyen de filtration des vibrations.

7. Support de groupe motopropulseur selon la revendication 6, **caractérisé en ce qu'**il comporte un anneau circulaire (10) disposé sensiblement horizontalement, sur lequel se raccorde deux bras (12, 14) comportant à leur extrémité les points de fixation, cet anneau contenant une matière souple (8) comprenant un moyeu central (2) fixé sur le groupe motopropulseur.

8. Véhicule automobile comprenant un brancard avant (20) recevant un support (1) de groupe motopropulseur, **caractérisé en ce que** ce support est réalisé suivant l'une quelconque des revendications précédentes.
